# DEMANDE DE BREVET EUROPEEN

(11) **EP 3 460 296 A1**
(43) Date de publication de la demande: **27.03.2019**
(21) Numéro de dépôt: 18194947.0
(22) Date de dépôt: 17.09.2018
(51) Int. Cl.: F16J 15/3236

(54) **DISPOSITIF D'ETANCHEITE DYNAMIQUE**

(30) Priorité: 21.09.2017 FR 1758756
(71) Demandeur: Euro Techniques Industries, 13420 Gemenos (FR)
(72) Inventeur: MATTONI, Gaëtan, 42123 SAINT-CYR-DE-FAVIERES (FR); BERENGER, Brice, 83400 HYERES (FR)
(74) Mandataire: Santarelli

(57) **Abrégé**

L'invention concerne un dispositif d'étanchéité dynamique configuré pour assurer l'étanchéité entre au moins une première pièce et au moins une deuxième pièce ayant un mouvement relatif de rotation par rapport à la première pièce. Le dispositif est formé par un joint comportant un talon ; une première lèvre principale s'étendant depuis le talon ; une deuxième lèvre principale s'étendant depuis le talon, la première lèvre étant en regard de la deuxième lèvre ; les première et deuxième lèvres étant configurées pour être énergisées par un premier fluide de sorte à étancher au moins l'une des première pièce et deuxième pièce. Selon l'invention, le joint est caractérisé en ce qu'il comporte en outre au moins une lèvre additionnelle située au niveau du talon à l'opposé des première et deuxième lèvres et étant configurée pour être énergisée par un second fluide de sorte à étancher au moins l'autre des première pièce et deuxième pièce.

## Description

### DOMAINE DE L'INVENTION

La présente invention concerne les dispositifs d'étanchéité dynamiques configurés pour assurer l'étanchéité entre deux pièces ayant un mouvement relatif de rotation l'une par rapport à l'autre.

### ARRIERE PLAN TECHNOLOGIQUE

Les dispositifs d'étanchéité dynamiques installés dans les équipements sous pression, aussi appelés joints tournants, peuvent trouver une application dans les navires de production pétrolières du domaine de l'offshore, permettant l'exploitation de champs d'hydrocarbures en mer à des profondeurs parfois très importantes. Des unités flottantes de production, de stockage et de déchargement (généralement connus par le terme « Floating Production Storage and Offloading » en anglais ou FPSO) sont en général formées par un navire qui est mobile, du fait de son environnement, autour d'une tourelle d'amarrage qui est géostationnaire. Le navire est généralement assujetti temporairement à la tourelle et des conduits formant un réseau de canalisations subaquatiques permettent une communication fluidique pour le transfert d'un fluide entre la tourelle et le navire.

Pour assurer l'étanchéité entre le navire et la tourelle et ainsi assurer l'intégrité du transfert de fluide, un dispositif d'étanchéité dynamique peut être interposé entre un organe fixe de la tourelle et un organe mobile du navire. Un tel dispositif peut comprendre un ou plusieurs joints ayant une section en forme de U ou V.

Un tel joint est pourvu d'un talon, de deux lèvres et optionnellement d'un ressort de précontrainte disposé entre les lèvres pour les rappeler en position écartée où elles assurent une fonction d'étanchéité.

Les lèvres ont pour fonction d'assurer l'étanchéité face au fluide tandis que la fonction du talon est d'assurer l'intégrité mécanique du joint et de résister à la pression du fluide. Un tel talon est souvent massif et contribue à la stabilité géométrique du joint tout en garantissant une résistance à la pression grâce à son inertie mécanique. Le ressort peut permettre quant à lui le remplissage d'une cavité formée entre les lèvres, avec le fluide à transférer ou avec un autre fluide, dit fluide de pressurisation, en maintenant une pression de contact suffisante des lèvres sur les faces des organes contre lesquelles elles viennent en appui de sorte à éviter les fuites. Un tel ressort, optionnel, a souvent pour but d'assurer l'étanchéité à la pression atmosphérique et à faible pression.

En opération, c'est-à-dire lorsque les organes fixes et mobiles sont assujettis mécaniquement l'un avec l'autre et que les dispositifs d'étanchéités sont interposés entre ces organes, au moins l'une des lèvres et/ou le talon sont susceptibles de glisser sur les faces des organes contre lesquels ils sont en appui. Un tel glissement engendre un phénomène de friction sur le joint qui peut user prématurément le joint. En outre, le joint est subit un effet de fluage lorsque ce dernier est sous charge, c'est-à-dire sous pression, et soumis à une température élevée (notamment du fait du mouvement de rotation de l'organe mobile par rapport à l'organe fixe) ; ce qui peut causer un phénomène dit d'extrusion pouvant aussi user prématurément le joint.

### OBJET DE L'INVENTION

L'invention vise à fournir un dispositif d'étanchéité du même type mais aux performances améliorées, en particulier en terme de fiabilité, dans le but de garantir notamment sa fonction principale d'étanchéité.

L'invention a ainsi pour objet, sous un premier aspect, un dispositif d'étanchéité dynamique configuré pour assurer l'étanchéité entre au moins une première pièce et au moins une deuxième pièce ayant un mouvement relatif de rotation par rapport à la première pièce. Le dispositif est formé par un joint comportant un talon, une première lèvre principale s'étendant depuis le talon, une deuxième lèvre principale s'étendant depuis le talon, la première lèvre étant en regard de la deuxième lèvre. Les première et deuxième lèvres sont configurées pour être énergisées par un premier fluide de sorte à étancher au moins l'une des première pièce et deuxième pièce.

Le joint comporte en outre au moins une lèvre additionnelle située au niveau du talon à l'opposé des première et deuxième lèvres et configurée pour être énergisée par un second fluide de sorte à étancher au moins l'autre des première pièce et deuxième pièce.

Dans le dispositif selon l'invention, la ou les lèvres additionnelles aident à assurer l'étanchéité du joint, en particulier au niveau du talon, car elles sont énergisées par un fluide et appuyées contre une paroi d'une des première et deuxième pièces.

Cela permet de préserver le talon qui a pour fonction principale d'apporter une inertie mécanique suffisante au joint afin d'en assurer l'intégrité.

Cela permet donc de fiabiliser dans le temps la fonction du joint qui est d'étancher et aussi d'augmenter sa une durée de vie grâce à une utilisation adaptée au fluide.

D'autres caractéristiques préférées, simples, commodes et économiques du dispositif d'étanchéité dynamique sont mentionnées ci-après.

Selon un mode de réalisation, le joint est annulaire, les première et deuxième lèvres s'étendent chacune depuis le talon globalement dans une direction radiale du joint, et la lèvre additionnelle s'étend dans une direction globalement perpendiculaire à la direction radiale du joint.

Selon un mode de réalisation, le talon et les première et deuxième lèvres sont configurés de sorte que le joint présente, en section, une forme générale en U ou en V.

Selon un mode de réalisation, le dispositif comporte plusieurs lèvres additionnelles.

Selon un mode de réalisation, le premier fluide et le second fluide sont identique.

Selon un mode de réalisation, le premier fluide et le second fluide sont différents.

Selon un mode de réalisation, le joint présente une face interne, une face externe opposée à la face interne et des parois latérales opposées rejoignant à la fois la face interne par une première extrémité et la face externe par une deuxième extrémité opposée à la première extrémité ; avec la face interne qui délimité le talon à la première extrémité du joint, la face externe qui est formée par des extrémités libres des première et deuxième lèvres à la deuxième extrémité du joint, et les parois latérales qui sont formées par des faces extérieures respectives des première et deuxième lèvres et par des paroi de côtés du talon; et avec les première et deuxième lèvres qui définissent entre elles une cavité du joint.

Selon un mode de réalisation, la lèvre additionnelle s'étend depuis une paroi latérale du joint en saillie d'une paroi de côté du talon.

Selon un mode de réalisation, la lèvre additionnelle présente une face inclinée saillant de la paroi de côté du talon et une face d'appui opposée à la face inclinée, la face d'appui rejoignant la face interne du joint.

Selon un mode de réalisation, le talon est pourvu d'une encoche formant une cavité dans la face interne du joint, et comportant une ou plusieurs lèvres additionnelles ménagées dans le talon au niveau de l'encoche.

Selon un mode de réalisation, le talon est pourvu d'une portion de protection située au niveau de la face interne du joint entre l'encoche et l'une de ses parois de côté.

Selon un mode de réalisation, les première et deuxième lèvres sont configurées pour être énergisées par le premier fluide et la lèvre additionnelle est configurée pour être énergisée par le second fluide ; le premier fluide étant un fluide de pressurisation et le second fluide étant un fluide principal à transférer depuis l'une des première et deuxième pièces vers l'autre des première et deuxième pièces.

Selon un mode de réalisation, le talon est pourvu d'un canal débouchant à une extrémité dans la cavité formée par l'encoche dans la face interne du joint et, à une extrémité opposée, dans un fond de la cavité du joint délimitant le talon à l'opposé de la face interne.

Selon un mode de réalisation, les première et deuxième lèvres sont configurées pour être énergisées par le premier fluide et la ou les lèvres additionnelles sont configurées pour être énergisée aussi par le premier fluide via le canal du talon; le premier fluide étant un fluide de pressurisation.

Selon un mode de réalisation, le joint est en deux parties, chaque partie comprenant une lèvre principale et une lèvre additionnelle.

L'invention a également pour objet, sous un deuxième aspect, un mécanisme d'assujettissement d'au moins une première pièce avec au moins une deuxième pièce ayant un mouvement relatif de rotation par rapport à la première pièce. Le mécanisme comporte un premier organe configuré pour être raccordée à la première pièce, un deuxième organe mobile par rapport au premier organe et configuré pour être raccordée à la deuxième pièce, le premier organe et le deuxième organe étant raccordés l'un avec l'autre pour le transfert d'un fluide depuis l'une des première et deuxième pièces vers l'autre des première et deuxième pièces, ainsi qu'au moins un dispositif d'étanchéité selon le premier aspect de l'invention, disposé dans au moins une gorge ménagée dans le mécanisme au niveau d'une jonction entre le premier organe et le deuxième organe.

Selon un mode de réalisation, le premier organe fait partie d'une tourelle d'amarrage d'une unité flottante de production et le deuxième organe fait partie d'une plateforme s'étendant depuis un navire amarré à la tourelle d'amarrage.

### BREVE DESCRIPTION DES DESSINS

D'autres avantages, buts et caractéristiques de la présente invention ressortent de la description qui suit d'un exemple de réalisation, donnée à titre illustratif et non limitatif, en référence aux dessins annexés sur lesquels :
- la **figure 1** représente schématiquement et partiellement une unité flottante de production comportant un navire et une tourelle, dont la communication fluidique est assurée notamment par un mécanisme d'assujettissement pourvu d'au moins un dispositif d'étanchéité conforme à l'invention ;
- la **figure 2** est une vue en coupe du mécanisme d'assujettissement de la **figure 1**, montrant plusieurs dispositifs d'étanchéité selon l'invention ;
- les **figures 3A, 3B** sont des vues respectivement en coupe et en perspective d'un dispositif d'étanchéité de la **figure 2** selon un premier mode de réalisation;
   les **figures 4A, 4B** sont des vues respectivement en coupe et en perspective d'un dispositif d'étanchéité de la **figure 2** selon un autre mode de réalisation; et
- les **figures 5A, 5B** sont des vues respectivement en coupe et en perspective d'un dispositif d'étanchéité de la **figure 2** selon encore un autre mode de réalisation.

### DESCRIPTION DETAILLEE D'UN EXEMPLE DE REALISATION

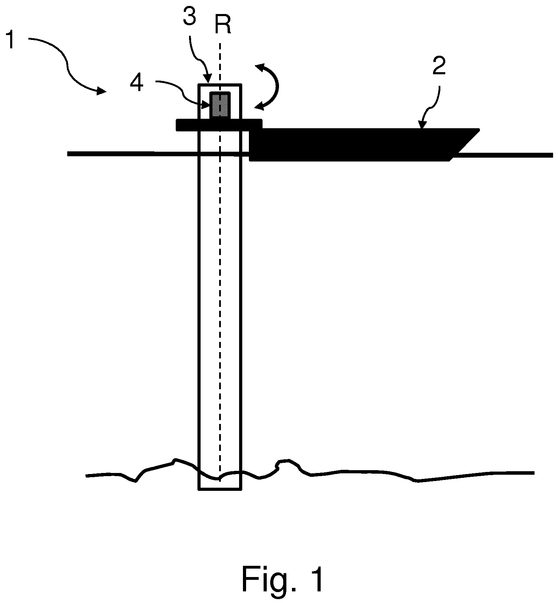

La **figure 1** représente schématiquement et partiellement une unité flottante de production 1, comprenant un navire 2 ainsi qu'une tourelle d'amarrage 3.

La tourelle 3 est ici assujettie mécaniquement à une plateforme s'étendant depuis le navire 2. La tourelle 3 est fixe tandis que le navire 2 peut tourner autour de la tourelle 3. Le navire est donc mobile en rotation autour de l'axe R représentée sur la **figure 1**. Des conduits (non visibles) formant un réseau de canalisations subaquatiques permettent une communication fluidique pour le transfert d'un fluide entre la tourelle 3 et le navire 2.

Pour assurer l'étanchéité entre le navire 2 et la tourelle 3 et ainsi assurer l'intégrité du transfert de fluide, un mécanisme 4, aussi appelé joint tournant, est interposé entre un organe fixe (aussi appelé premier organe) de la tourelle 3 et un organe mobile (aussi appelé deuxième organe) de la plateforme du navire 2.

Le mécanisme 4 assure l'étanchéité lors d'un transfert de fluide entre la tourelle et la plateforme.

Des communications électroniques peuvent également être assurées entre la tourelle et la plateforme via le mécanisme 4.

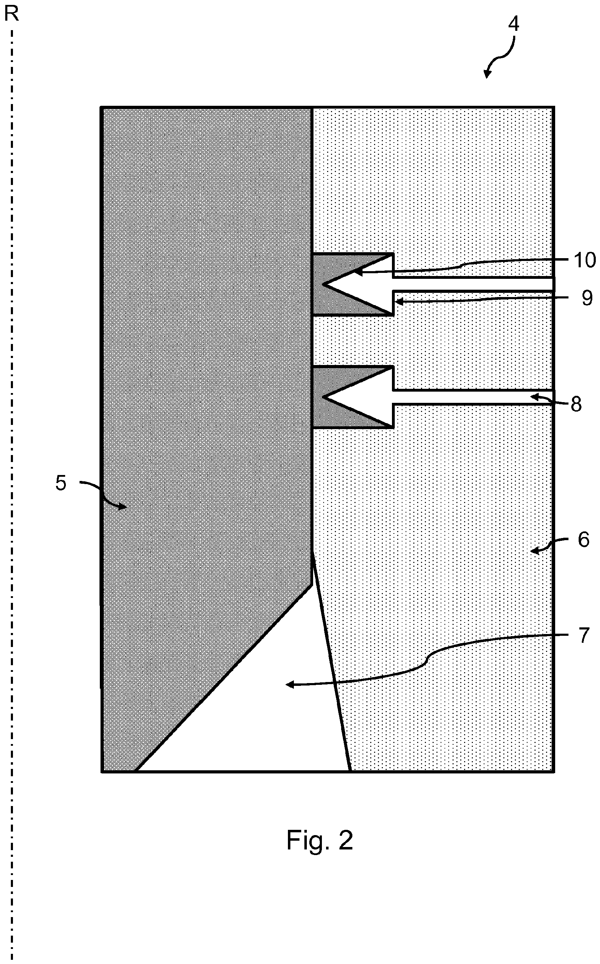

La **figure 2** montre en coupe partielle le mécanisme 4, pourvu de l'organe fixe 5 et de l'organe mobile 6 qui sont ici raccordés l'un avec l'autre pour assurer le transfert du fluide via une cavité principale 7 ménagée entre ces organes 5, 6.

Le mécanisme 4 est pourvu de canaux radiaux 8 débouchant sur des gorges 9 ménagées sensiblement au niveau de la jonction entre les organes 5 et 6. Dans au moins certaines de ces gorges 9 peut être logé un dispositif d'étanchéité 10 selon un mode de réalisation de l'invention.

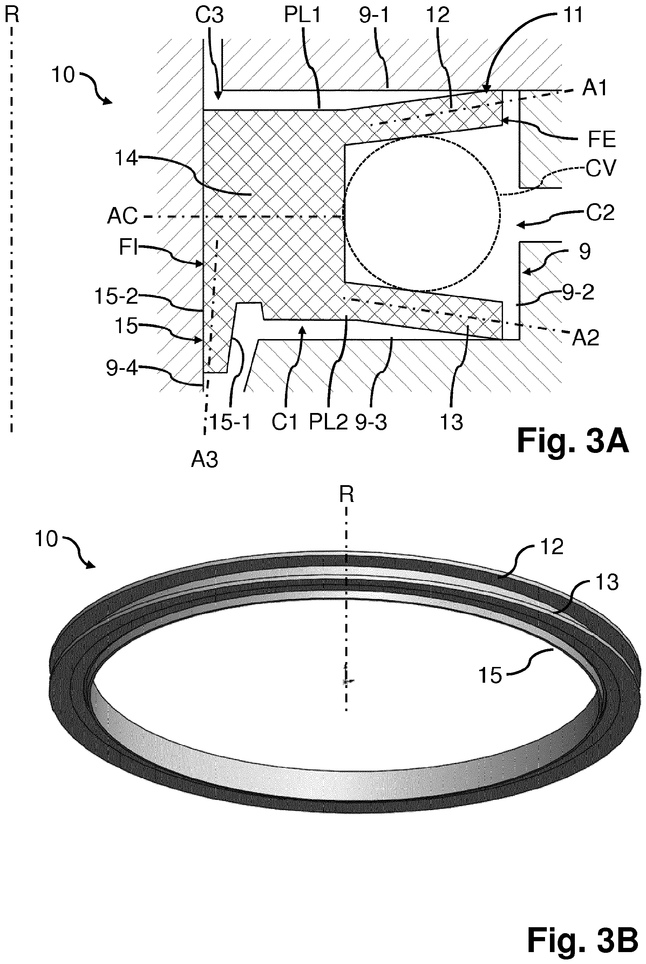

Les **figures 3 à 5** illustrent des dispositifs d'étanchéité selon des différents modes de réalisation.

Les figures 3A et 3B sont des vues respectivement en coupe et en perspective d'un dispositif d'étanchéité 10 de la **figure 2** selon un premier mode de réalisation.

Le dispositif d'étanchéité 10 comporte un joint annulaire 11, présentant un axe de révolution R, et pourvu d'une première lèvre 12 et d'une deuxième lèvre 13 s'étendant depuis un talon 14, la première lèvre 12 en regard de la deuxième lèvre 13.

Le dispositif 10 présente une face interne FI, une face externe FE opposée à la face interne FI et des parois latérales PL1, PL2 opposées rejoignant chacune à la fois, la face interne FI par une première extrémité et la face externe FE par une deuxième extrémité opposée à la première extrémité.

Les première et deuxième lèvres 12 et 13 s'étendent chacune depuis le talon 14 dans une direction respective qui est inclinée par rapport à une direction radiale du dispositif 10. Le talon 14 et les lèvres 12, 13 sont ainsi configurés de sorte que le joint 11 présente, en section, une forme générale en V.

Les lèvres 12, 13 définissent entre elles une cavité CV (en pointillés) du joint 11. La cavité du joint 11 présente un fond délimitant le talon 14 à l'opposé de la face interne 15 du joint, ainsi que des côtés s'étendant depuis le fond et formés par des faces intérieures respectives des première et deuxième lèvres 12 et 13.

On notera que les parois latérales PL1, PL2 du joint 11 sont formées par des faces extérieures respectives des première et deuxième lèvres 12 et 13 respectivement, opposées à leurs faces intérieures respectives.

Le joint 11 comprend une troisième lèvre 15 ou « lèvre additionnelle » située au niveau du talon 14, à l'opposé des premières et deuxième lèvres ou « lèvres principales ». La troisième lèvre 15 s'étend depuis la paroi latérale PL2 du joint 11 en saillie d'une paroi de côté du talon 14.

Les première et deuxième lèvres 12, 13 s'étendent chacune depuis le talon 14 globalement dans une direction radiale du joint 11, et la troisième lèvre 15 s'étend dans une direction globalement perpendiculaire à la direction radiale du joint 11.

On notera que les lèvres 12, 13 ont des axes d'extension A1, A2 dans un plan sensiblement normal à l'axe de révolution R du dispositif 10, ici essentiellement parallèle à un axe central AC du talon 14. La lèvre 15 a un axe d'extension A3 essentiellement perpendiculaire à l'axe central AC du talon, et essentiellement parallèle à l'axe de révolution R.

En outre, la troisième lèvre 15 présente une face inclinée 15-1 saillant de la paroi latérale PL2 de côté du talon 14 et une face d'appui 15-2 opposée à la face inclinée, la face d'appui rejoignant la face interne FI du joint 11.

Ici, la gorge 9 dans laquelle est introduit le dispositif d'étanchéité 10, est délimitée par une première paroi 9-1 horizontale, une deuxième paroi 9-2 verticale, une troisième paroi 9-3 horizontale qui s'étend en regard de la première paroi 9-1 horizontale, avec la deuxième paroi 9-2 verticale qui s'étend entre et rejoint les première et troisième parois 9-1 et 9-3.

Ces parois 9-1, 9-2 et 9-3 sont ménagées dans l'organe mobile 6.

La gorge 9 dans laquelle est introduit le dispositif d'étanchéité 10 est en outre délimitée par une quatrième paroi 9-4 verticale s'étendant en regard de la deuxième paroi 9-2 verticale et à distance de des première et troisième parois 9-1 et 9-3 horizontales.

Cette quatrième paroi 9-4 est ménagée dans le système et fait ici partie de l'organe fixe 5.

Lorsque le dispositif d'étanchéité 10 est présent dans la gorge (voir **figure 3A**), une cavité C1 est formée entre la paroi latérale PL2 du joint 11 du côté de la deuxième lèvre 13 et la troisième paroi 9-3 horizontale ; une cavité C2 est formée entre la face externe 16 du dispositif 10 et la deuxième paroi 9-2 verticale, la cavité C2 communiquant avec la cavité du joint 11 ; et une cavité C3 est formée entre la paroi latérale PL1 du joint 11 du côté de la première lèvre 12 et la première paroi 9-1 horizontale.

On notera que des conduits de cheminement de fluides sont ménagés dans les première, deuxième et troisième parois 9-1, 9-2 et 9-3 et débouchent dans la gorge 9, respectivement dans les cavités C3, C2 et C1.

On va maintenant décrire la coopération du dispositif d'étanchéité 10 avec les parois 9-1 à 9-4 de la gorge 9.

Les première et deuxième lèvres 12 et 13 sont ici en contact, par leurs faces extérieures, respectivement avec les première et troisième parois 9-1 et 9-3 horizontales.

Le talon 14 est ici en contact, au niveau de la face interne FI du joint 11, avec la quatrième paroi 9-4 verticale.

Dans un tel agencement, la troisième lèvre 15 et le talon 14 peuvent glisser contre la quatrième paroi 9-4 verticale qui est mobile ; tandis que les première et deuxième lèvres 12 et 13 ne peuvent pas ou quasiment pas glisser contre les première et troisième parois 9-1 et 9-3 horizontales.

Il s'agit d'un montage dit radial du dispositif d'étanchéité.

On notera que le talon 14 permet la coopération et le maintien des première et deuxième lèvres 12 et 13 avec le reste du joint 11. Le talon 14 est une partie massive qui assure l'intégrité mécanique du joint 11 et lui permet de résister à la pression d'un fluide.

La cavité C2 du joint 11 est remplie d'un fluide, ici dit de pressurisation. Un fluide de pressurisation est un fluide utilisé pour contre pressuriser le joint 11 afin d'opposer une pression plus forte au fluide principal. La cavité C2 et la cavité CV du joint 11 sont ici remplies d'un tel fluide de pressurisation, lequel est confiné dans ces cavités par l'action des première et deuxième lèvres 12 et 13.

Le fluide principal à transférer est quant à lui présent dans la cavité 7 du mécanisme 4 à la jonction entre les organes fixe 5 et mobile 6. Le fluide principal est aussi présent dans la cavité C1 de la gorge 9, où la lèvre 13 forme une barrière pour empêcher le fluide principal de cheminer au-delà vers la cavité C2, et éventuellement à la cavité C3 par la lèvre 12. En outre, le fluide principal énergise et appui la troisième lèvre 15 contre la paroi 9-4. Le fluide principal est ainsi empêché de passer entre le talon 14 et la paroi 9-4 vers la cavité C3. La cavité C3 de la gorge 9 est ici vide lorsque le joint 11 assure sa fonction d'étanchéité.

Les lèvres « principales » 12 et 13 sont énergisées par le fluide de pressurisation, tandis que la lèvre additionnelle 15 est énergisée ici par le fluide principal. Le talon 14 n'assure pas seul l'étanchéité, mais est aidé de la lèvre additionnelle 15.

On notera qu'un effort tangentiel est appliqué par le fluide de pressurisation sur le talon 14, ce qui tend à limiter l'extrusion du joint.

On notera que la lèvre additionnelle 15 ne nécessite pas de système de pressurisation annexe supplémentaire et peut assurer sa fonction grâce à la pression du fluide principal.

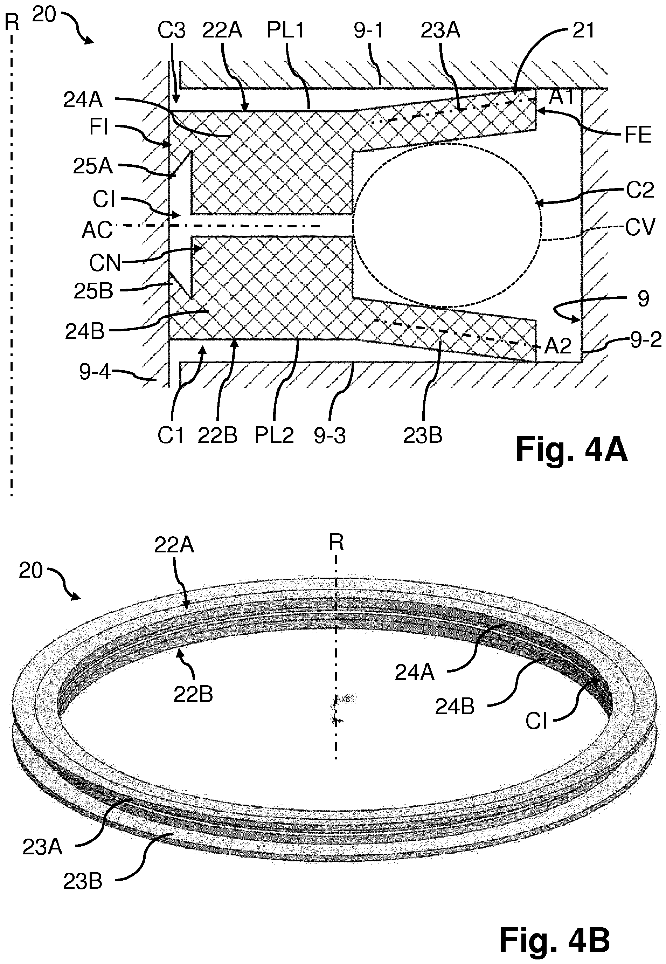

Les **figures 4A, 4B** sont des vues respectivement en coupe et en perspective d'un dispositif d'étanchéité 20 de la **figure 2** selon un autre mode de réalisation.

Le dispositif d'étanchéité 20 comporte un joint annulaire 21 présentant un axe de révolution R et en deux parties 22A, 22B, chaque partie 22A, 22B comprenant une lèvre principale, respectivement 23A, 23B s'étendant depuis des talons 24A, 24B. Les parties 22A, 22B, les lèvres 23A, 23B, et les talons 24A, 24B sont en regard les uns les autres.

Le dispositif 20 présente une face interne FI, une face externe FE opposée à la face interne FI et des parois latérales PL1, PL2 opposées rejoignant chacune à la fois, la face interne FI par une première extrémité et la face externe FE par une deuxième extrémité opposée à la première extrémité.

Les lèvres principales 23A, 23B s'étendent chacune depuis les talons 24A, 24B dans des directions respectives qui sont inclinées par rapport à une direction radiale du dispositif 20. Les talons 24A, 24B et les lèvres 23A, 23B sont ainsi configurés de sorte que le joint 21 présente, en section, une forme générale en U.

Les lèvres 23A, 23B définissent entre elles une cavité CV (en pointillés) du joint 21 qui présente un fond délimitant les talons 24A, 24B à l'opposé de la face interne FI du joint, ainsi que des côtés s'étendant depuis le fond et formés par des faces intérieures respectives des lèvres 23A, 23B.

On notera que les parois latérales PL1, PL2 du joint 21 sont formées par des faces extérieures respectives des lèvres 23A, 23B opposées à leurs faces intérieures respectives.

Chaque partie 22A, 22B comprend en outre une lèvre additionnelle 25A, 25B respectivement. Les lèvres 25A, 25B sont situées au niveau des talons 24A, 24B à l'opposé des lèvres principales 23A, 23B. Les lèvres 25A, 25B forment en partie la face intérieure FI du joint 21 en saillie d'une paroi de côté des talons 24A, 24B, et forment une chambre intérieure CI reliée à la cavité CV formée par les lèvres principales 23A, 23B par un canal CN qui passe entre les parties 22A, 22B du joint 21.

Les lèvres principales 23A, 23B s'étendent chacune depuis les talons 24A, 24B globalement dans une direction radiale du joint 21, et les lèvres additionnelles 25A, 25B s'étendent dans une direction globalement perpendiculaire à la direction radiale du joint 21.

On notera que les lèvres principales 23A, 23B ont des axes d'extension A1, A2 dans un plan normal à l'axe de révolution R du dispositif 20, ici essentiellement parallèle à un axe central AC du joint 21. Les lèvres 25A, 25B ont des axes d'extension (non-montrés ici) essentiellement perpendiculaire à l'axe central AC du joint 21, et essentiellement parallèle à l'axe de révolution R.

En outre, les lèvres additionnelles 25A, 25B présentent chacune une face inclinée saillant de la chambre intérieure CI et une face d'appui opposée à la face inclinée, la face d'appui rejoignant la face interne FI du joint 21.

Comme précédemment, la gorge 9 dans laquelle est introduit le dispositif d'étanchéité 20, est délimitée par une première paroi 9-1 horizontale, une deuxième paroi 9-2 verticale, une troisième paroi 9-3 horizontale qui s'étend en regard de la première paroi 9-1 horizontale, avec la deuxième paroi 9-2 verticale qui s'étend entre et rejoint les première et troisième parois 9-1 et 9-3.

Ces parois 9-1, 9-2 et 9-3 sont ménagées dans l'organe mobile 6.

La gorge 9 dans laquelle est introduit le dispositif d'étanchéité 20 est en outre délimitée par une quatrième paroi 9-4 verticale s'étendant en regard de la deuxième paroi 9-2 verticale et à distance de des première et troisième parois 9-1 et 9-3 horizontales.

Cette quatrième paroi 9-4 est ménagée dans le système et fait ici partie de l'organe fixe 5.

Lorsque le dispositif d'étanchéité 20 est présent dans la gorge (voir **figure A**), une cavité C1 est formée entre la paroi latérale PL2 du joint 21 du côté de la lèvre 22B et la troisième paroi 9-3 horizontale ; une cavité C2 est formée entre la face externe FE du dispositif 20 et la deuxième paroi 9-2 verticale, la cavité C2 communiquant avec la cavité interne CI du joint 21 par le canal CN ; et une cavité C3 est formée entre la paroi latérale PL1 du joint 21 du côté de la lèvre 22A et la première paroi 9-1 horizontale.

On notera que des conduits de cheminement de fluides sont ménagés dans les première, deuxième et troisième parois 9-1, 9-2 et 9-3 et débouchent dans la gorge 9, respectivement dans les cavités C3, C2 et C1.

On va maintenant décrire la coopération du dispositif d'étanchéité 20 avec les parois 9-1 à 9-4 de la gorge 9.

Les lèvres principales 23A, 23B sont ici en contact, par leurs faces extérieures, respectivement avec les première et troisième parois 9-1 et 9-3 horizontales.

Les talons 24A, 24B sont ici en contact, au niveau de la face interne FI du joint 21, avec la quatrième paroi 9-4 verticale.

Dans un tel agencement, les lèvres additionnelles 25A, 25B et les talons 24A, 24B peuvent glisser contre la quatrième paroi 9-4 verticale qui est mobile ; tandis que les lèvres principales 23A, 23B ne peuvent pas ou quasiment pas glisser contre les première et troisième parois 9-1 et 9-3 horizontales.

Il s'agit d'un montage dit radial du dispositif d'étanchéité.

On notera que les talons 24A, 24B permettent la coopération et le maintien des lèvres principales 23A, 23B avec le reste du joint 21, notamment les lèvres additionnelles 25A, 25B. Les talons 24A, 24B sont des parties massives qui assurent l'intégrité mécanique du joint 21 et lui permet de résister à la pression d'un fluide.

La cavité C2 du joint 21 est remplie d'un fluide, ici le fluide de pressurisation, qui passe par le canal CN à la chambre interne CI. Le fluide de pressurisation est confiné dans ces cavités par l'action des lèvres principales 23A, 23B et les lèvres additionnelles 25A, 25B et est empêché de passer entre les talons 24A, 24B et la paroi 9-4 aux cavités C1, C3.

Le fluide principal à transférer est quant à lui présent dans la cavité 7 du mécanisme 4 à la jonction entre les organes fixe 5 et mobile 6. Le fluide principal est aussi présent dans la cavité C1 de la gorge 9, où la lèvre 23B forme une barrière pour empêcher le fluide principal de cheminer au-delà vers la cavité C2, et éventuellement vers la cavité C3 par la lèvre 23A. La cavité C3 de la gorge 9 est ici vide lorsque le joint 21 assure sa fonction d'étanchéité.

Les lèvres « principales » 23A, 23B et les lèvres « additionnelles » 25A, 25B sont énergisées par le fluide de pressurisation. Les talons 24A, 24B n'assurent pas seuls l'étanchéité, mais sont aidés par des lèvres additionnelles 25A, 25B. De plus, un effort tangentiel engendré par le fluide de pressurisation tend, par friction, à réduire l'extrusion à laquelle est soumis le joint.

Le fluide principal est donc isolé de l'extérieur par le fluide de pressurisation à plus haute pression. Cette barrière fluide assure la sécurité de l'équipement face aux fluides dangereux (notamment face aux gaz) car la fuite ne peut se produire que du fluide de pressurisation vers le fluide principal ou vers l'extérieur.

On notera que la lèvre additionnelle ne nécessite pas de système de pressurisation annexe supplémentaire et peut uniquement assurer sa fonction grâce à la pression du fluide principal.

Dans une variante non-illustrée, le dispositif peut être pourvu d'une encoche formant une cavité dans la face interne du joint, le joint étant formé en une seule partie plutôt qu'en deux parties. Dans ce cas, des canaux sont repartis autour du joint, permettant le passage entre la cavité CV et la chambre interne CI.

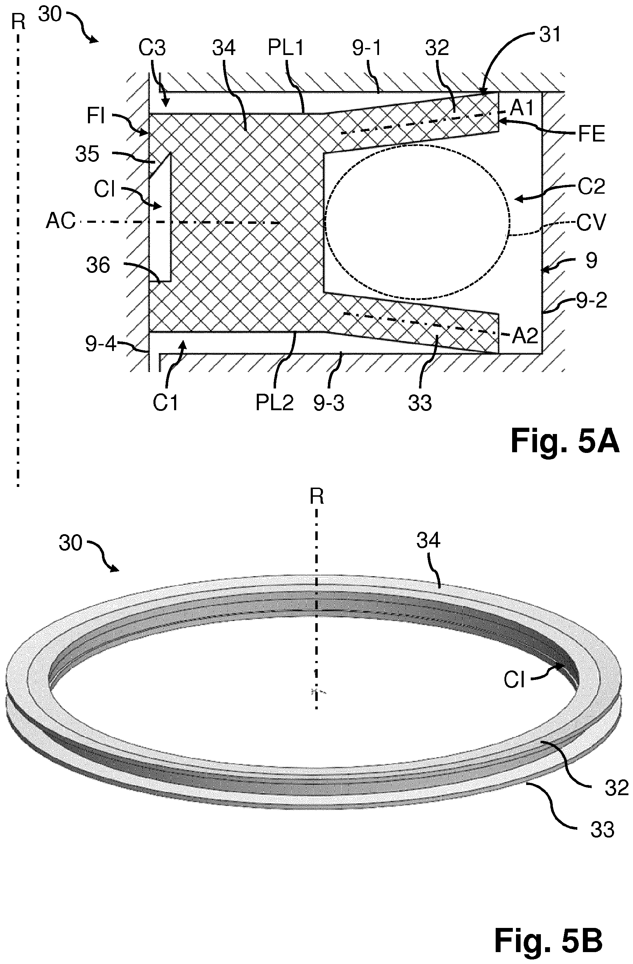

Les **figures 5A, 5B** sont des vues respectivement en coupe et en perspective d'un dispositif d'étanchéité 30 de la **figure 2** selon encore un autre mode de réalisation.

Le dispositif d'étanchéité 30 comporte un joint annulaire 31 présentant un axe de révolution R et deux lèvres principales 32, 33 s'étendant depuis un talon 34 et en regard l'une l'autre.

Le dispositif 30 présente une face interne FI, une face externe FE opposée à la face interne FI et des parois latérales PL1, PL2 opposées rejoignant chacune à la fois, la face interne FI par une première extrémité et la face externe FE par une deuxième extrémité opposée à la première extrémité.

Les lèvres principales 32, 33 s'étendent chacune depuis le talon 34 dans des directions respectives qui sont inclinées par rapport à une direction radiale du dispositif 30. Le talon 34 et les lèvres 32, 33 sont ainsi configurés de sorte que le joint 31 présente, en section, une forme générale en U.

Les lèvres 32, 33 définissent entre elles une cavité CV (en pointillés) du joint 31 qui présente un fond délimitant le talon 34 à l'opposé de la face interne FI du joint, ainsi que des côtés s'étendant depuis le fond et formés par des faces intérieures respectives des lèvres 32, 33.

On notera que les parois latérales PL1, PL2 du joint 31 sont formées par des faces extérieures respectives des lèvres principales 32, 33 opposées à leurs faces intérieures respectives.

Le joint 31 comprend en outre une lèvre additionnelle 35 située au niveau du talon 34 à l'opposé de la lèvre principale 32. Le joint 31 comprend en outre une paroi horizontale 36 située au niveau du talon 34 à l'opposé de la lèvre principale 33, en regard de la lèvre additionnelle 35. Une chambre intérieure CI est formée entre la lèvre additionnelle 35 et la paroi horizontale 36.

Les lèvres principales 32, 33 s'étendent chacune depuis le talon 34 globalement dans une direction radiale du joint 31, et la lèvre additionnelle 35 s'étende dans une direction globalement perpendiculaire à la direction radiale du joint 31.

On notera que les lèvres principales 32, 33 ont des axes d'extension A1, A2 dans un plan normal à l'axe de révolution R du dispositif 30, ici essentiellement parallèle à un axe central AC du joint 31. La lèvre 35 a un axe d'extension (non-montré ici) essentiellement perpendiculaire à l'axe central AC du joint 31, et essentiellement parallèle à l'axe de révolution R.

En outre, la lèvre additionnelle 35 présente une face inclinée saillant de la chambre intérieure CI et une face d'appui opposée à la face inclinée, la face d'appui rejoignant la face interne FI du joint 31.

Comme précédemment, la gorge 9 dans laquelle est introduit le dispositif d'étanchéité 30, est délimitée par une première paroi 9-1 horizontale, une deuxième paroi 9-2 verticale, une troisième paroi 9-3 horizontale qui s'étend en regard de la première paroi 9-1 horizontale, avec la deuxième paroi 9-2 verticale qui s'étend entre et rejoint les première et troisième parois 9-1 et 9-3.

Ces parois 9-1, 9-2 et 9-3 sont ménagées dans l'organe mobile 6.

La gorge 9 dans laquelle est introduit le dispositif d'étanchéité 30 est en outre délimitée par une quatrième paroi 9-4 verticale s'étendant en regard de la deuxième paroi 9-2 verticale et à distance de des première et troisième parois 9-1 et 9-3 horizontales.

Cette quatrième paroi 9-4 est ménagée dans le système et fait ici partie de l'organe fixe 5.

Lorsque le dispositif d'étanchéité 30 est présent dans la gorge (voir **figure 5A**), une cavité C1 est formée entre la paroi latérale PL2 du joint 31 du côté de la lèvre 33 et la troisième paroi 9-3 horizontale ; une cavité C2 est formée entre la face externe FE du dispositif 30 et la deuxième paroi 9-2 verticale; et une cavité C3 est formée entre la paroi latérale PL1 du joint 31 du côté de la lèvre 32 et la première paroi 9-1 horizontale.

On notera que des conduits de cheminement de fluides sont ménagés dans les première, deuxième et troisième parois 9-1, 9-2 et 9-3 et débouchent dans la gorge 9, respectivement dans les cavités C3, C2 et C1.

On va maintenant décrire la coopération du dispositif d'étanchéité 30 avec les parois 9-1 à 9-4 de la gorge 9.

Les lèvres principales 32, 33 sont ici en contact, par leurs faces extérieures, respectivement avec les première et troisième parois 9-1 et 9-3 horizontales.

Le talon 34 est ici en contact, au niveau de la face interne FI du joint 31, avec la quatrième paroi 9-4 verticale.

Dans un tel agencement, la lèvre additionnelle 35 et le talon 34 peuvent glisser contre la quatrième paroi 9-4 verticale qui est mobile ; tandis que les lèvres principales 32, 33 ne peuvent pas ou quasiment pas glisser contre les première et troisième parois 9-1 et 9-3 horizontales.

Il s'agit d'un montage dit radial du dispositif d'étanchéité.

On notera que le talon 34 permet la coopération et le maintien des lèvres principales 32, 33 avec le reste du joint 31, notamment la lèvre additionnelle 35. Le talon 34 est une partie massive qui assure l'intégrité mécanique du joint 31 et lui permet de résister à la pression d'un fluide.

La cavité C2 du joint 31 est remplie d'un fluide, ici le fluide de pressurisation, qui est confiné dans cette cavité par l'action des lèvres principales 32, 33.

Le fluide principal à transférer est quant à lui présent dans la cavité 7 du mécanisme 4 à la jonction entre les organes fixe 5 et mobile 6. Le fluide principal est aussi présent dans la cavité C1 de la gorge 9, où la lèvre 33 forme une barrière pour empêcher le fluide principal de cheminer au-delà vers la cavité C2, et éventuellement vers la cavité C3 par la lèvre 32. Une quantité de fluide principal passe entre le talon 34, plus spécifiquement une partie 34B du talon, et la paroi 9-4, et se trouve dans la chambre intérieure CI. La lèvre additionnelle 35 est appuyée contre la paroi 9-4. La variante proposée consiste à utiliser deux lèvres externes au contact d'un fluide de pressurisation, une lèvre interne au contact du fluide principal et un talon protecteur.

Le but est de fiabiliser l'étanchéité au niveau du talon 34 et de fournir une barrière de protection, grâce à sa partie 34B, face aux pollutions présentes dans le fluide principal. Ainsi, l'étanchéité au niveau du talon 34 du joint 31 est notamment assurée par la lèvre additionnelle 35 énergisée par le fluide principal. La partie 34B du talon joue le rôle de barrière matérielle aux débris et autres particules pouvant se trouver dans le fluide principal. Cette partie 34B, située entre la cavité C1 et la lèvre additionnelle 35, filtre le fluide principal et permet ainsi de limiter l'usure par abrasion du talon 34 et de la lèvre additionnelle 35. Les deux lèvres principales 32, 33 peuvent permettre de limiter le phénomène d'extrusion et ainsi d'optimiser le contact de la lèvre additionnelle 35 et du talon 34 sur la paroi 9-4.

La cavité C3 de la gorge 9 est ici vide lorsque le joint 21 assure sa fonction d'étanchéité.

Les lèvres « principales » 32, 33 sont énergisées par le fluide de pressurisation. Le talon 34 n'assure pas seule l'étanchéité, mais est aidé de la lèvre additionnelle 35. De plus, un effort tangentiel engendré par le fluide de pressurisation tend, par friction, à réduire l'extrusion à laquelle est soumis le joint.

Le fluide principal est donc isolé de l'extérieur par le fluide de pressurisation à plus haute pression. Cette barrière fluide assure la sécurité de l'équipement face aux fluides dangereux (notamment face aux gaz) car la fuite ne peut se produire que du fluide de pressurisation vers le fluide principal ou vers l'extérieur.

On notera que la lèvre additionnelle ne nécessite pas de système de pressurisation annexe supplémentaire et peut uniquement assurer sa fonction grâce à la pression du fluide principal.

Dans des variantes non illustrées, le dispositif 10, 20, 30 pourrait comporter en outre un ressort de précontrainte logé dans la cavité CV du joint, par exemple un ressort lame en acier pourvu de deux branches raccordées l'une à l'autre par une portion de jonction qui repose sur le fond de la cavité tandis que les branches viennent respectivement en appui contre les faces intérieures des première et deuxième lèvres 12, 13 ; 23A, 23B ; 32, 33. Le ressort garantit un serrage des première et deuxième lèvres contre les première et troisième parois 9-1 et 9-3 de la gorge 9, formant les surfaces à étancher. En outre, les lèvres peuvent être chacune pourvues, à une extrémité libre respective, d'un retour dirigé vers la cavité CV du joint.

Dans d'autres variantes non illustrées, le ressort est une pièce de section circulaire logée dans la cavité CV du joint ou bien alternativement le ressort est formé de plusieurs pièces réparties dans la cavité CV et le long du joint.

Dans une autre variante non illustrée, le ressort est un ressort spiral de section rectangulaire, par exemple en forme de tore.

On notera que le ressort peut participer à l'étanchéité au niveau respectivement des faces intérieures des première et deuxième lèvres 12, 13 ; 23A, 23B ; 32, 33.

Pour limiter l'usure prématurée du joint face au phénomène de friction, ce dernier est réalisé majoritairement en un polymère de synthèse et en particulier à partir de polyétheréthercétone (PEEK), de polytétrafluoroéthylène (PTFE), de matériaux fluoro polymères équivalents (par exemple le « perfluoroalkoxy alkane » ou PFA, le « polychlorotrifluoroethylene » ou PCTFE, l'éthylène tétrafluoroéthylène ou ETFE...) ou de polyuréthane (PU).

Par « majoritairement » il est entendu que le joint comprend plus de 50% du matériau indiqué.

Ainsi qu'indiqué plus haut, le joint est annulaire et présente ainsi un axe de révolution. Suivant l'orientation de l'axe de révolution par rapport aux lèvres, il s'agit d'un joint dit facial ou radial lorsque l'axe de révolution est sensiblement perpendiculaire aux lèvres (comme dans l'exemple illustré), ou bien d'un joint dit piston lorsque l'axe de révolution est sensiblement parallèle aux lèvres.

On a vu que dans un joint radial, les lèvres agissent sur le même organe, mobile mais possiblement fixe tandis que le talon agit ici via la bague sur l'autre organe. Par ailleurs, on a vu que l'utilisation d'un joint radial nécessite un fluide de pressurisation.

Dans des variantes non illustrées :
- il s'agit d'un joint facial ou bien d'un joint piston, où une des lèvres agit sur un des organes fixe ou mobile, tandis que l'autre lèvre et le talon, vis la bague, agit l'autre organe ; et/ou
- seul le fluide principal chemine dans les cavités.

On rappelle plus généralement que l'invention ne se limite pas aux exemples décrits et représentés.

## Revendications

1. Dispositif d'étanchéité dynamique (10, 20, 30) configuré pour assurer l'étanchéité entre au moins une première pièce et au moins une deuxième pièce ayant un mouvement relatif de rotation par rapport à la première pièce, le dispositif étant formé par un joint (11, 21, 31) comportant :
un talon (14, 24A, 24B, 34) ;
une première lèvre (12, 23A, 32) principale s'étendant depuis le talon ;
une deuxième lèvre (13, 23B, 33) principale s'étendant depuis le talon, la première lèvre étant en regard de la deuxième lèvre ;
les première et deuxième lèvres étant configurées pour être énergisées par un premier fluide de sorte à étancher au moins l'une des première pièce et deuxième pièce ;
le joint étant **caractérisé en ce qu'**il comporte en outre au moins une lèvre additionnelle (15, 25A, 25B, 35) située au niveau du talon à l'opposé des première et deuxième lèvres et étant configurée pour être énergisée par un second fluide de sorte à étancher au moins l'autre des première pièce et deuxième pièce.

2. Dispositif selon la revendication 1, dans lequel le joint (11, 21, 31) est annulaire, les première et deuxième lèvres (12, 13, 23A, 23B, 32, 33) s'étendent chacune depuis le talon (14, 24A, 24B, 34) globalement dans une direction radiale du joint, et la lèvre additionnelle (15, 25A, 25B, 35) s'étend dans une direction globalement perpendiculaire à la direction radiale du joint.

3. Dispositif selon la revendication 2, dans lequel le talon (14, 24A, 24B, 34) et les première et deuxième lèvres (12, 13, 23A, 23B, 32, 33) sont configurés de sorte que le joint (11, 21, 31) présente, en section, une forme générale en U ou en V.

4. Dispositif selon l'une des revendications 1 à 3, comportant plusieurs lèvres additionnelles (25A, 25B).

5. Dispositif selon l'une des revendications 1 à 4, dans lequel le premier fluide et le second fluide sont identique.

6. Dispositif selon l'une des revendications 1 à 4, dans lequel le premier fluide et le second fluide sont différents.

7. Dispositif l'une des revendications 1 à 6, dans lequel le joint (11, 21, 31) présente une face interne (FI), une face externe (FE) opposée à la face interne et des parois latérales (PL1, PL2) opposées rejoignant à la fois la face interne par une première extrémité et la face externe par une deuxième extrémité opposée à la première extrémité ; avec la face interne qui délimité le talon (14, 24A, 24B, 34) à la première extrémité du joint, la face externe qui est formée par des extrémités libres des première et deuxième lèvres à la deuxième extrémité du joint, et les parois latérales qui sont formées par des faces extérieures respectives des première et deuxième lèvres et par des paroi de côtés du talon; et avec les première et deuxième lèvres qui définissent entre elles une cavité (CV) du joint.

8. Dispositif selon la revendication 7, dans lequel la lèvre additionnelle (15, 25A, 25B, 35) s'étend depuis une paroi latérale (PL1, PL2) du joint (11, 21, 31) en saillie d'une paroi de côté du talon (14, 24A, 24B, 34).

9. Dispositif selon la revendication 8, dans lequel la lèvre additionnelle (15, 25A, 25B, 35) présente une face inclinée saillant de la paroi de côté du talon (14, 24A, 24B, 34) et une face d'appui opposée à la face inclinée, la face d'appui rejoignant la face interne (FI) du joint (11, 21, 31).

10. Dispositif selon la revendication 7, dans lequel le talon est pourvu d'une encoche formant une cavité dans la face interne du joint, et comportant une ou plusieurs lèvres additionnelles ménagées dans le talon au niveau de l'encoche.

11. Dispositif selon la revendication 10, dans lequel le talon est pourvu d'une portion de protection située au niveau de la face interne du joint entre l'encoche et l'une de ses parois de côté.

12. Dispositif selon l'une des revendications 7 à 11, dans lequel les première et deuxième lèvres (12 ,13, 32, 33) sont configurées pour être énergisées par le premier fluide et la lèvre additionnelle (15, 35) est configurée pour être énergisée par le second fluide ; le premier fluide étant un fluide de pressurisation et le second fluide étant un fluide principal à transférer depuis l'une des première et deuxième pièces vers l'autre des première et deuxième pièces.

13. Dispositif selon l'une des revendications 10 et 11, dans lequel le talon (24A, 24B) est pourvu d'un canal débouchant à une extrémité dans la cavité formée par l'encoche dans la face interne (FI) du joint (21) et, à une extrémité opposée, dans un fond de la cavité (CV) du joint (21) délimitant le talon à l'opposé de la face interne.

14. Dispositif selon la revendication 13, dans lequel les première et deuxième lèvres (23A, 23B) sont configurées pour être énergisées par le premier fluide et la ou les lèvres additionnelles (25A, 25B) sont configurées pour être énergisée aussi par le premier fluide via le canal (CN) du talon (24A, 24B) ; le premier fluide étant un fluide de pressurisation.

15. Dispositif selon l'une des revendications 1 à 14, dans lequel le joint (21) est en deux parties (22A, 22B), chaque partie comprenant une lèvre principale (23A, 23B) et une lèvre additionnelle (25A, 25B).

16. Mécanisme d'assujettissement (4) d'au moins une première pièce avec au moins une deuxième pièce ayant un mouvement relatif de rotation par rapport à la première pièce, comportant un premier organe (5) configuré pour être raccordée à la première pièce, un deuxième organe (6) mobile par rapport au premier organe (5) et configuré pour être raccordée à la deuxième pièce, le premier organe (5) et le deuxième organe (6) étant raccordés l'un avec l'autre pour le transfert d'un fluide depuis l'une des première et deuxième pièces vers l'autre des première et deuxième pièces, ainsi qu'au moins un dispositif d'étanchéité (10, 20, 30) selon l'une des revendications 1 à 15 disposé dans au moins une gorge (9) ménagée dans le mécanisme au niveau d'une jonction entre le premier organe (5) et le deuxième organe (6).

17. Mécanisme selon la revendication 16, dans lequel le premier organe (5) fait partie d'une tourelle d'amarrage (3) d'une unité flottante (1) de production et le deuxième organe (6) fait partie d'une plateforme s'étendant depuis un navire (2) amarré à la tourelle d'amarrage.
